# EUROPÄISCHE PATENTSCHRIFT

(11) **EP 0 731 298 B1**
(45) Veröffentlichungstag und Bekanntmachung des Hinweises auf die Patenterteilung: **06.12.2000**
(21) Anmeldenummer: 96102550.9
(22) Anmeldetag: 21.02.1996
(51) Int. Cl.: F16H 61/30, F16H 61/28, F15B 11/12

(54) **Stellantrieb für Schaltgetriebe von Kraftfahrzeugen**
Actuator system for vehicle gear-box
Système d'actionneurs pour boite de vitesses de véhicule

(30) Priorität: 04.03.1995 DE 19507704
(43) Veröffentlichungstag der Anmeldung: 11.09.1996
(73) Patentinhaber: Hydraulik-Ring GmbH, 09212 Limbach-Oberfrohna (DE)
(72) Erfinder: Tischer, Dieter, D-73240 Wendlingen (DE); Meyer, Roland, D-91154 Roth (DE)
(74) Vertreter: Jackisch-Kohl, Anna-Katharina

(56) Entgegenhaltungen:
- EP-A- 0 633 411
- FR-A- 1 282 546
- GB-A- 1 061 175
- GB-A- 2 156 456
- US-A- 3 312 146
- PATENT ABSTRACTS OF JAPAN vol. 010, no. 277 (M-519), 19.September 1986 & JP 61 099707 A (HINO MOTORS LTD), 17.Mai 1986,
- PATENT ABSTRACTS OF JAPAN vol. 010, no. 196 (M-497), 10.Juli 1986 & JP 61 041003 A (HINO MOTORS LTD), 27.Februar 1986,

## Beschreibung

Die Erfindung betrifft einen Stellantrieb für Schaltgetriebe von Kraftfahrzeugen nach dem Oberbegriff des Anspruches 1, wie es aus der GB-A-1 061 175 bekannt ist.

Bei diesem bekannten Stellantrieb kann das als Kolben ausgebildete Stellteil in drei unterschiedliche axiale Lagen verstellt werden. Diesen unterschiedlichen Schaltstellungen des Stellteiles entsprechen unterschiedliche Gänge bzw. Gassen des Schaltgetriebes, das mit dem Stellantrieb gekuppelt ist. Die Hilfskolben werden mit ihren einander zugewandten Enden in jeweils einer Stellung gehäuseseitig abgestützt.

Der Erfindung liegt die Aufgabe zugrunde, den gattungsgemäßen Stellantrieb so auszubilden, daß mit hohem Systemdruck ohne Druckreduzierventile gearbeitet werden kann und dabei durch eine Minimierung der beaufschlagten Flächen des Stellteiles und der Hilfskolben kleine Kräfte erzeugt werden können.

Diese Aufgabe wird beim gattungsgemäßen Stellantrieb erfindungsgemäß mit den kennzeichnenden Merkmalen des Anspruches 1 gelöst.

Beim erfindungsgemäßen Stellantrieb werden die Hilfskolben in einer Mittelstellung mit ihren Anschlägen an den gehäuseseitigen Gegenanschlägen abgestützt. Die weiteren Anschläge der Hilfskolben liegen im Bewegungsweg der entsprechenden Gegenanschläge des Stellteiles. Wird daher das Stellteil axial verschoben, wird je nach Verschieberichtung der eine oder der andere Hilfskolben über seinen weiteren Anschlag mitgenommen. Da die weiteren Anschläge der Hilfskolben die Gegenanschläge des Stellteiles teilweise abdecken, ergeben sich für das Druckmedium nur kleine Wirkflächen am Stellteil. Es kann mit hohem Systemdruck gearbeitet werden, ohne daß Druckreduzierventile notwendig sind. Infolge der erfindungsgemäßen Ausbildung können die vom Druckmedium beaufschlagten Flächen des Stellteiles und der Hilfskolben minimiert werden, so daß nur kleine Kräfte erzeugt werden. Der erfindungsgemäße Stellantrieb eignet sich hervorragend für eine Automatisierung der Schaltgetriebe in Kraftfahrzeugen, die konstruktiv für konventionelle Handschaltungen ausgelegt sind.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1a bis Fig. 1c: jeweils in einem Längsschnitt einen erfindungsgemäßen Stellantrieb in verschiedenen Schaltstellungen,
- Fig. 2a bis Fig. 2d: im Längsschnitt verschiedene Schaltstellungen einer weiteren Ausführungsform eines erfindungsgemäßen Stellantriebes,
- Fig. 3: in perspektivischer Darstellung zwei Stellantriebe, die mit einer Schaltwelle eines Getriebes eines Kraftfahrzeuges miteinander gekuppelt sind,
- Fig. 4 und Fig. 5: jeweils in schematischer Darstellung zwei in einem gemeinsamen Gehäuse untergebrachte Stellantriebe, die mit einer Schaltwelle eines Getriebes verbunden sind,
- Fig. 6: in einer Darstellung entsprechend Fig. 3 zwei Stellantriebe gemäß Fig. 2, die an eine Schaltwelle eines Schaltgetriebes eines Kraftfahrzeuges angeschlossen sind,
- Fig. 7 und Fig. 8: entsprechend den Darstellungen gemäß den Fig. 4 und 5 die Verbindung zweier in einem gemeinsamen Gehäuse untergebrachter Stellantriebe mit einer Schaltwelle eines Kraftfahrzeug-Schaltgetriebes,
- Fig. 9 bis Fig. 20: jeweils in schematischer Darstellung unterschiedliche Formen von Gehäusen, in denen jeweils zwei Stellantriebe parallel zueinander liegend angeordnet sind,
- Fig. 21: teilweise in Ansicht und teilweise im Schnitt die Kupplung eines aus zwei Stellantrieben bestehenden Stellantriebssystem mit einer Schaltwelle eines Schaltgetriebes mittels eines Kardangelenkes,
- Fig. 22: einen Schnitt längs der Linie XXII-XXII in Fig. 21.

Die im folgenden beschriebenen Stellantriebe dienen dazu, bei Schaltgetrieben von Kraftfahrzeugen Schaltwellen zu verstellen. Sämtliche Stellantriebe sind Linearantriebe, bei denen eine Kolbenstange axial verschoben wird, um die Schaltwelle des Schaltgetriebes zu verschieben und zu verdrehen.

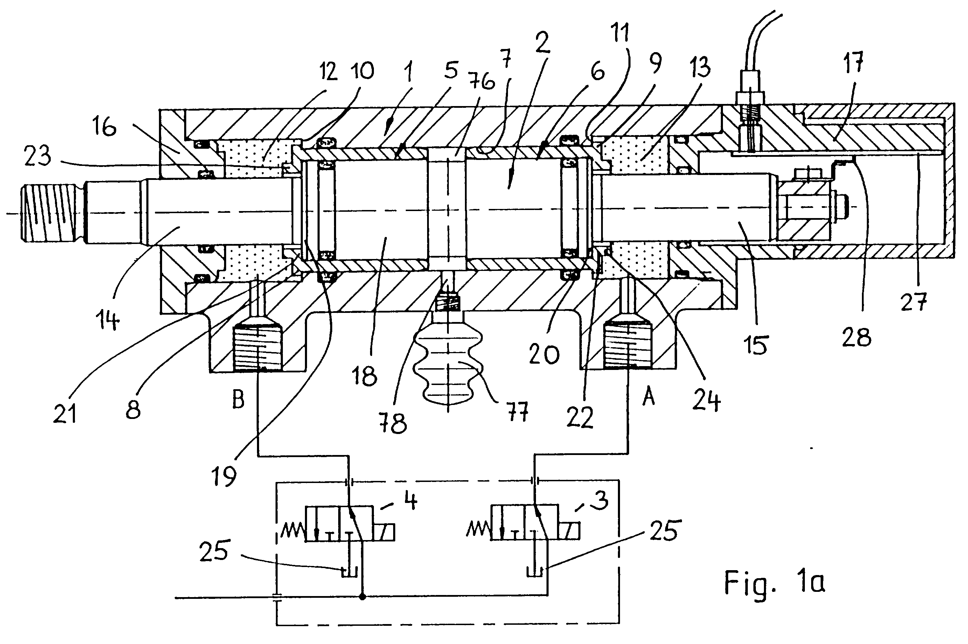

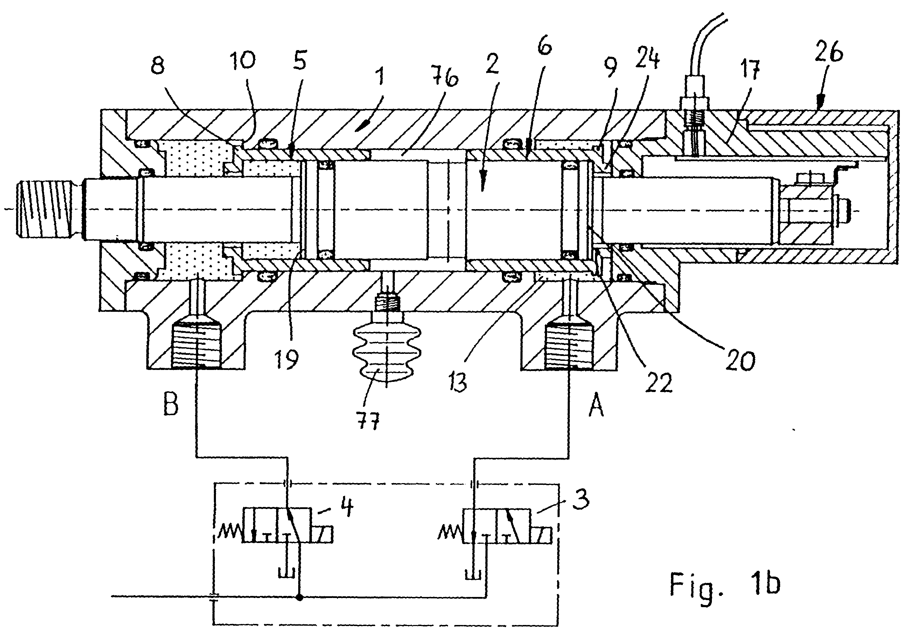

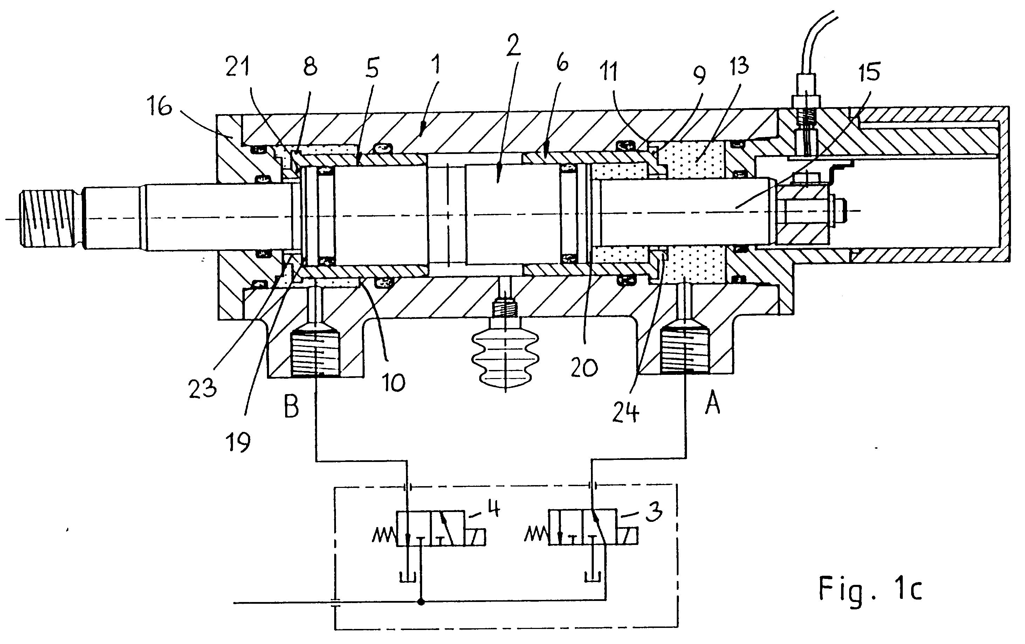

Der Stellantrieb gemäß Fig. 1 hat ein Gehäuse 1, in dem ein Kolben 2 axial verschiebbar eingebaut ist. Das Gehäuse 1 hat zwei Anschlüsse A und B, an die jeweils ein Wegeventil 3 und 4 angeschlossen ist. Auf dem Kolben 2 sitzen zwei als Buchsen ausgebildete Hilfskolben 5 und 6, die in eine Axialbohrung 7 des Gehäuses eingebaut sind. Die beiden Hilfskolben 5, 6 sind gegenüber dem Kolben 2 und dem Gehäuse 1 abgedichtet.

Die beiden Hilfskolben 5, 6 sind spiegelsymmetrisch zueinander angeordnet und haben jeweils einen äußeren, umlaufenden Flansch 8, 9, mit dem sie in der in Fig. 1a dargestellten Mittelstellung an einer Schulter 10, 11 des Gehäuses 1 anliegen. Über diese Schultern 10, 11 geht die Axialbohrung 7 in jeweils einen Druckraum 12 und 13 über, der von im Durchmesser verringerten Kolbenabschnitten 14 und 15 (Kolbenstangen) des Kolbens 2 durchsetzt wird. Der Druckraum 12 wird durch einen Deckel 16 nach außen begrenzt, durch den die Kolbenstange 14 abgedichtet nach außen ragt. Der gegenüberliegende Druckraum 13 wird durch die Stirnseite eines Potentiometergehäuses 17 geschlossen. Die Kolbenstange 15 ragt abgedichtet durch diese Gehäusestirnseite. Die Druckräume 12, 13 sind mit den Anschlüssen A und B verbunden und werden mit Hydraulikmedium in noch zu beschreibender Weise versorgt.

Zwischen den Kolbenstangen 14, 15 und dem mittleren, im Durchmesser größeren Kolbenteil 18 werden radial nach außen sich erstreckende Ringschultern 19 und 20 gebildet. Diese Ringschultern 19, 20 dienen als Mitnahmeflächen für radial nach innen gerichtete Ringflansche 21, 22 der Hilfskolben 5, 6. Sie liegen auf gleicher Höhe wie die radial nach außen gerichteten Flansche 8 und 9 und gehen in die Kolbenstangen 14, 15 mit Abstand umgebende Ringteile 23 und 24 über.

Mit den Wegeventilen 3, 4 kann der Kolben 2 in drei unterschiedliche Axialstellungen verschoben werden. Werden beide Wegeventile 3, 4 in die Stellung gemäß Fig. 1a geschaltet, kann das Hydraulikmedium von der Hydraulikmediumquelle über die Anschlüsse A und B in die Druckräume 12, 13 strömen. Die Hilfskolben 5, 6 werden in Richtung zueinander so weit verschoben, bis sie mit ihren Flanschen 8, 9 an den Schultern 10, 11 des Gehäuses 1 anliegen. Über den Ringspalt zwischen den Ringteilen 23, 24 und den Kolbenstangen 14, 15 strömt das Hydraulikmedium auch an die flächengleichen Ringschultern 19, 20 des Kolbens 2. Da die Hilfskolben 5, 6 mit ihren Flanschen 8, 9 an den Gehäuseschultern 10, 11 abgestützt sind, müssen die Hilfskolben selbst keine Kräfte aufnehmen. Dadurch können die Hilfskolben 5, 6 sehr dünnwandig ausgebildet sein, so daß der Stellantrieb eine sehr kompakte Bauform haben kann. Die Wandstärke der Hilfskolben 5, 6 beträgt beispielsweise nur etwa 1 mm.

Die axiale Länge des Kolbens 2 kann, wenn sehr hohe Fertigungsgenauigkeiten eingehalten werden, dem Abstand zwischen den Ringflanschen 21, 22 der Hilfskolben 5, 6 entsprechen, wenn diese am Gehäuse abgestützt sind. In diesem Falle ist die Mittelstellung des Kolbens 2 durch die am Gehäuse abgestützten Hilfskolben 5, 6 bestimmt.

Die axiale Länge des Kolbens 2 kann aber auch, beispielsweise aufgrund von Fertigungstoleranzen, kleiner sein als der Abstand der Ringflansche 21, 22 der Hilfskolben 5, 6, wenn sie gehäuseseitig abgestützt sind. Der Kolben 2 kann in diesem Falle maximal nur so weit verschoben werden, bis eine seiner beiden Ringschultern 19, 20 durch eine äußere Krafteinwirkung an einem der beiden Ringflansche 21, 22 des jeweiligen Hilfskolbens 5, 6 anliegt. In diesem Augenblick wird ein Teil der Ringschulter 19 oder 20 durch den Ringflansch 21 oder 22 des Hilfskolbens 5 oder 6 abgedeckt, so daß die durch das Hydraulikmedium beaufschlagbare wirksame Fläche der Ringschulter 19 oder 20 kleiner ist als die gegenüberliegende Ringschulter, die in diesem Falle nicht durch den entsprechenden Ringflansch des Hilfskolbens abgedeckt ist. Aufgrund dieser Flächendifferenz kann der Kolben 2 durch äußere Krafteinwirkung somit maximal bis zur Anlage seiner jeweiligen Ringschulter 19 oder 20 am Hilfskolben 5 oder 6 verschoben werden.

Sollte die axiale Länge des Kolbens 2 größer sein als der Abstand zwischen den Schultern 10, 11 des Gehäuses 1, dann wird der Kolben 2 zusammen mit dem jeweiligen Hilfskolben 5 oder 6 maximal nur so weit verschoben, bis dieser jeweilige Hilfskolben mit seinem nach außen gerichteten Flansch 8 bzw. 9 an der Gehäuseschulter 10 bzw. 11 anliegt.

Bei sämtlichen beschriebenen Möglichkeiten ist davon ausgegangen, daß die Anlageflächen der radial nach außen gerichteten Flansche 8, 9 und der radial nach innen gerichteten Ringflansche 21, 22 der Hilfskolben 5, 6 jeweils in einer gemeinsamen Radialebene liegen. Auf die beschriebene Weise wird der Kolben 2, abhängig von den geschilderten Toleranzen der Hilfskolben 5, 6, des Kolbens 2 und des Gehäuses 1, in eine im nachfolgenden als Mittelstellung bezeichnete Lage eingestellt. Diese Mittelstellung kann um das jeweilige Maß der Toleranz von der theoretischen Mittelstellung geringfügig abweichen.

Wird das Wegeventil 3 so umgeschaltet, daß der Druckraum 13 zum Tank 25 hin entlastet wird, wird der auf die Ringschulter 20 des Kolbens 2 wirkende Hydraulikdruck kleiner als der hydraulische, auf die Ringschulter 19 wirkende Systemdruck. Dadurch wird der Kolben 2 in Fig. 1 nach rechts in die in Fig. 1b dargestellte Lage verschoben. Die Ringschulter 20 des Kolbens 2 kommt am Ringflansch 22 des Hilfskolbens 6 zur Anlage und nimmt ihn dadurch mit. Der andere Hilfskolben 5 bleibt mit seinem Flansch 8 in Anlage an der Schulter 10 des Gehäuses 1. Aufgrund der kleinstmöglichen, vom Hydraulikmedium zu beaufschlagenden Flächen kann der noch zu beschreibende Schaltvorgang kostengünstig durchgeführt werden, weil Ventile mit kleinstmöglicher Nennweite eingesetzt werden können. Es müssen insbesondere bei der Gassenwahl keine Proportionaldruckminderventile mit Rückführung eingesetzt werden.

Durch Verschieben des Hilfskolbens 6 wird der den Kolben 2 umgebende Ringraum 76 vergrößert. Dieser Ringraum 76 steht mit einem Faltenbalg 77 über eine Bohrung 78 im Gehäuse 1 in Verbindung. Bei der Vergrößerung des Ringraums 76 wird somit aus dem Faltenbalg 77 Luft angesaugt, wodurch das Volumen des Faltenbalges 77 verringert wird. Auf diese Weise ist sichergestellt, daß im Ringraum 76 der Atmosphärendruck aufrechterhalten bleibt, wenn der Hilfskolben 6 die Stellung gemäß Fig. 1b einnimmt. Grundsätzlich könnte der Ringraum 76 auch unmittelbar mit der Atmosphäre verbunden werden. Dabei würden allerdings Schmutzteilchen, Feuchtigkeit und dergleichen in den Ringraum 76 gelangen, wodurch die Funktionsfähigkeit des Stellantriebes beeinträchtigt werden könnte. Diese Probleme werden durch Einsatz des Faltenbalges 77 in sehr einfacher Weise zuverlässig vermieden.

Um aus der Schaltstellung gemäß Fig. 1b wieder in die Schaltstellung gemäß Fig. 1a zu gelangen, wird das Wegeventil 3 wieder umgeschaltet, so daß das Hydraulikmedium im Druckraum 13 unter Druck gesetzt wird. Da der Hilfskolben 6 mit dem Ringteil 24 versehen ist, mit dem er an der Stirnseite des Potentiometergehäuses 17 anliegt, liegt der Ringflansch 22 des Hilfskolbens 6 mit Abstand vom Potentiometergehäuse 17. Dadurch kann das Hydraulikmedium den Ringflansch 22 beaufschlagen, so daß der Kolben 2 mit dem Hilfskolben 6 in die Stellung gemäß Fig. 1a zurückgeschoben wird. Das im Ringraum 76 befindliche Luftvolumen wird beim Zurückschieben des Hilfskolbens 6 über die Bohrung 78 in den Faltenbalg 77 verdrängt.

Sind die beiden Wegeventile 3, 4 bei dieser Rückführung so geschaltet, wie in Fig. 1a dargestellt, dann wird beim Zurückschieben des Kolbens 2 das in der Druckkammer 12 befindliche, von der Ringschulter 19 des Kolbens 2 verdrängte Hydraulikmedium über die Wegeventile 3, 4 in die Druckkammer 13 zurückgeführt. Dadurch muß von der Hydraulikmittelquelle nur noch der restliche Teil des Hydraulikmediums nachgeführt werden, der zum Verschieben des Hilfskolbens 6 notwendig ist, der auf der gegenüberliegenden Seite durch den im Ringraum 76 herrschenden Atmosphärendruck belastet ist.

Es ist für die Rückführung des Kolbens 2 aus der Stellung gemäß Fig. 1b in die Stellung gemäß Fig. 1a auch möglich, den Druckraum 12 zum Tank 25 hin zu entlasten und lediglich den Druckraum 13 mit der Hydraulikmittelquelle zu verbinden. In diesem Falle wird der Kolben 2 gegen den Restdruck in der Druckkammer 12 verschoben. Der Hilfskolben 6 läuft synchron mit, da er auf der Druckkammerseite mit dem Systemdruck und auf der gegenüberliegenden Seite mit Atmosphärendruck belastet wird. Solange das Hydraulikmedium im Druckraum 12 unter Druck steht, wird der Hilfskolben 5 in seiner Anlage an der Schulter 10 des Gehäuses 1 gehalten.

Soll der Kolben 2 aus der Stellung gemäß Fig. 1a in die in Fig. 1c dargestellte dritte Schaltstellung verschoben werden, wird das Wegeventil 4 umgeschaltet, während der Druck im Druckraum 13 aufrechterhalten bleibt. Der Druckraum 12 wird entlastet, so daß unter dem im Druckraum 13 herrschenden Systemdruck der Kolben 2 nach links verschoben wird. Der Hilfskolben 6 bleibt mit seinem Flansch 9 in Anlage an der Schulter 11 des Gehäuses 1. Da der Ringteil 24 des Hilfskolbens 6 die Kolbenstange 15 mit Abstand umgibt, kann das Hydraulikmedium im Druckraum 13 an die Ringschulter 20 des Kolbens 2 gelangen, so daß er axial verschoben wird. Der Kolben 2 nimmt über seine Ringschulter 19, die in Anlage an den Ringflansch 21 des Hilfskolbens 5 gelangt, den Hilfskolben mit, bis er mit der Stirnseite seines Ringteils 23 am Deckel 16 zur Anlage kommt. Dadurch hat der Ringflansch 21 axialen Abstand vom Deckel 16.

Der Außendurchmesser der Ringflansche 21, 22 der Hilfskolben 5, 6 ist kleiner als der Innendurchmesser der Druckräume 12, 13, so daß sichergestellt ist, daß das Hydraulikmedium an die jeweilige Stirnseite der Ringflansche 21, 22 gelangen kann. Beim Verschieben in die Stellung gemäß Fig. 1c treten die gleichen Verhältnisse auf, wie sie beim Verschieben in die Stellung gemäß Fig. 1b im einzelnen erläutert worden sind.

Soll der Kolben 2 wieder in seine Mittelstellung gemäß Fig. 1a zurückgeschoben werden, erfolgt die Umschaltung auf entsprechend gleiche Weise wie beim Zurückschieben des Kolbens 2 aus der Stellung gemäß Fig. 1b in die Mittelstellung. Es kann darum auf die entsprechenden Ausführungen zu Fig. 1b verwiesen werden.

Es ist aber auch möglich, das Wegeventil 3 umzuschalten, so daß der Druckraum 13 druckentlastet ist. In diesem Fall wird der Kolben 2 aus der Schaltstellung gemäß Fig. 1c in die Schaltstellung gemäß Fig. 1b verschoben. Sobald der Hilfskolben 5 mit seinem Flansch 8 an der Schulter 10 des Gehäuses 1 zur Anlage kommt, bleibt der Hilfskolben 5 stehen. Gleichzeitig oder kurz danach gelangt die Ringschulter 20 des Kolbens 2 in Anlage an den Flansch 22 des Hilfskolbens 6, der dadurch vom Kolben 2 mitgenommen wird.

Die jeweilige Umsteuerung der Wegeventile 3, 4 erfolgt in bekannter Weise. Somit läßt sich der Kolben 2 in die zum Schalten des Getriebes des Kraftfahrzeuges notwendigen Schaltstellungen verschieben.

Das Gehäuse 17 enthält ein Potentiometer 26 als Wegmeßsystem, mit dem die jeweilige Stellung des Kolbens 2 einfach erfaßt und überwacht werden kann. Das Potentiometer 26 hat in bekannter Weise mindestens eine Leiterbahn 27, an der ein mit dem Kolben 2 verbundener Schleifer 28 anliegt. Je nach Stellung des Schleifers 28 längs der Leiterbahn 27 kann die jeweilige Position des Kolbens 2 erfaßt werden. Die Ausbildung eines Potentiometers ist bekannt und wird darum nicht im einzelnen beschrieben.

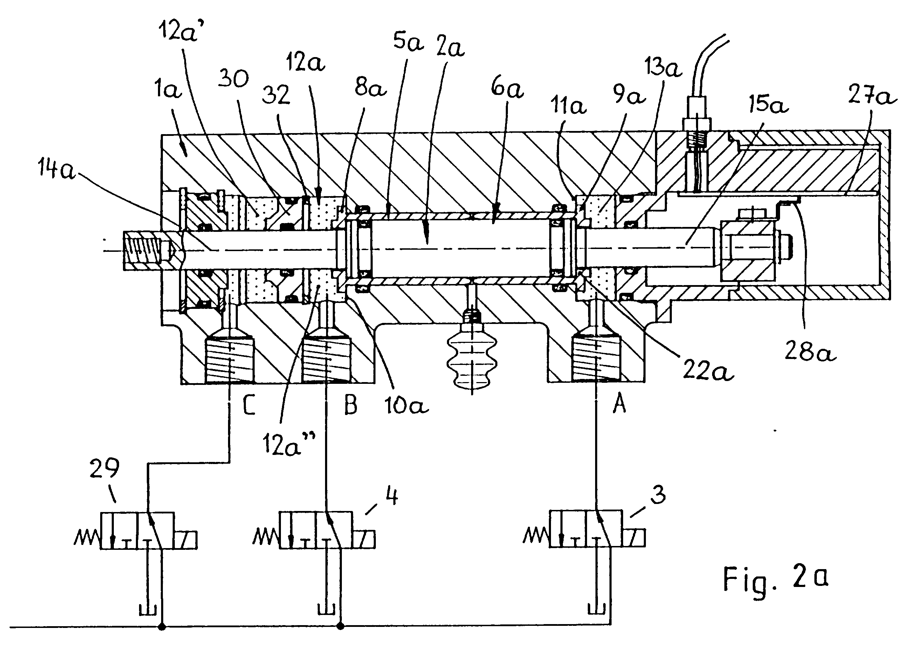

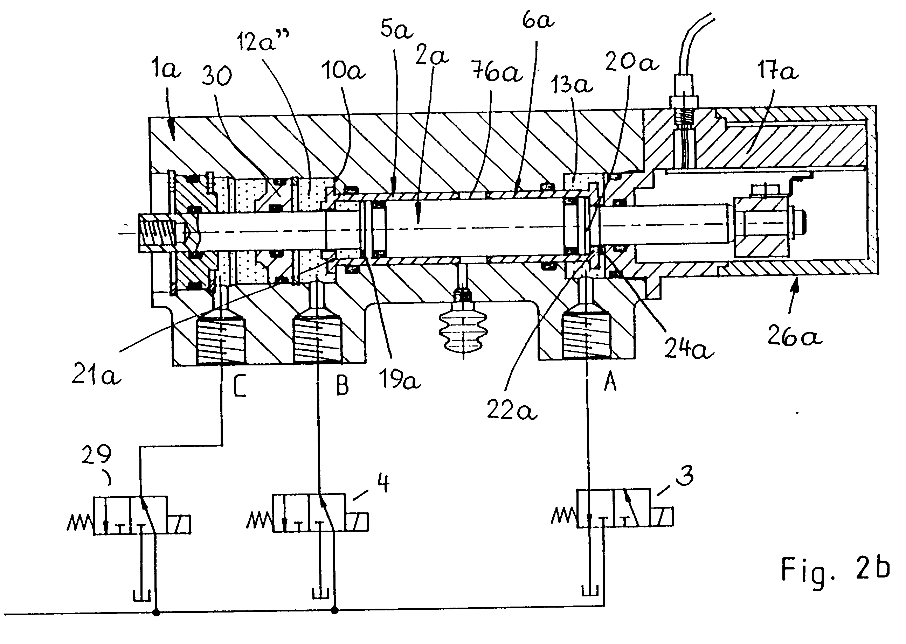

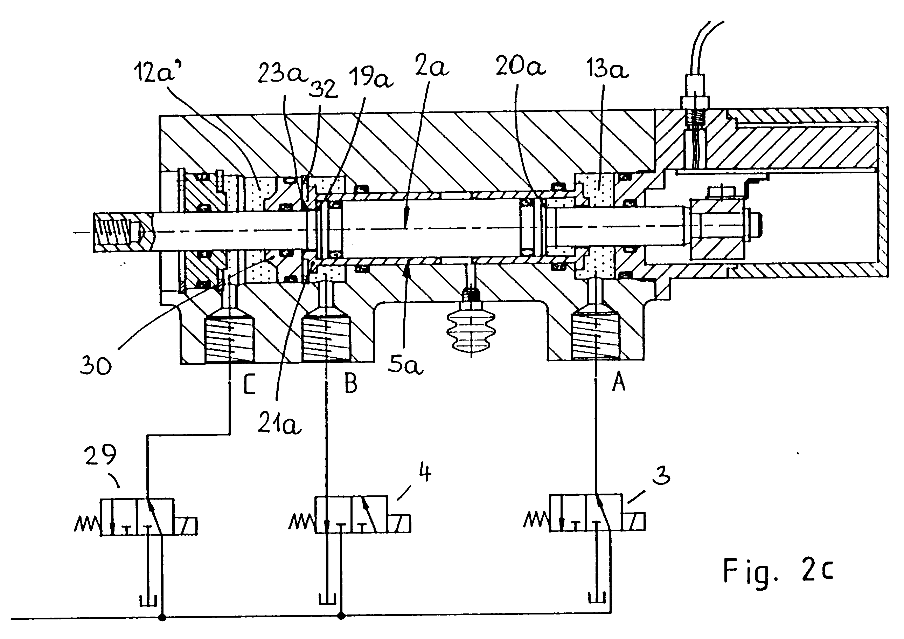

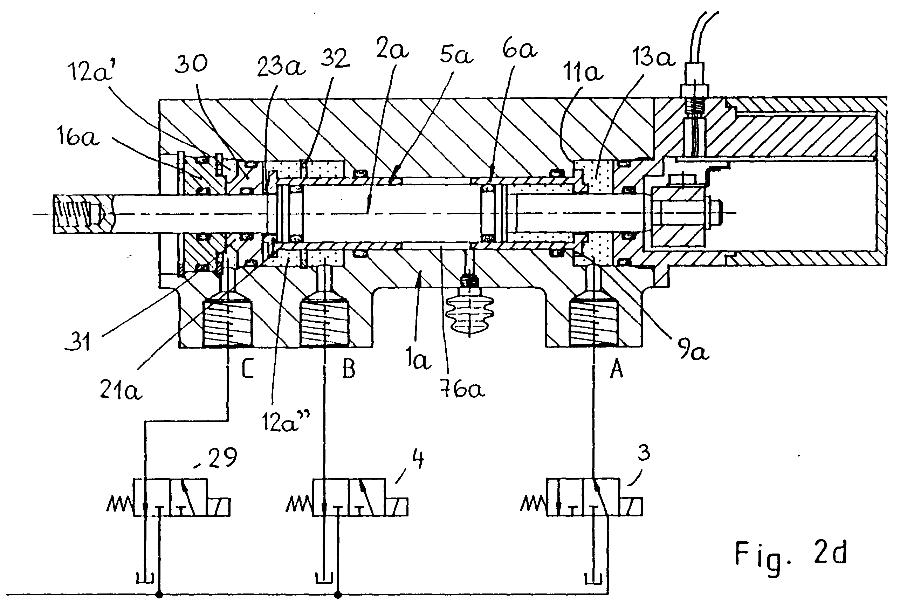

Fig. 2 zeigt einen Stellantrieb, bei dem der Kolben 2a in vier verschiedene Schaltstellungen axial verschoben werden kann. Das Gehäuse 1a hat die drei Anschlüsse A, B und C, die jeweils mit den Wegeventilen 3, 4 und 29 verbunden sind. Auf dem Kolben 2a sitzen abgedichtet und axial verschieblich die Hilfskolben 5a und 6a, die gleich ausgebildet sind wie beim vorigen Ausführungsbeispiel. Der Kolben 2a hat die im Durchmesser verringerten Kolbenstangen 14a und 15a. Auf der Kolbenstange 14a sitzt radial abgedichtet ein Kolben 30, der abgedichtet an der Innenwandung des Druckraumes 12a anliegt. Er wird durch den Kolben 30 in zwei Druckkammern 12a' und 12a" unterteilt. In die Druckkammer 12a' mündet der Anschluß C und in die Druckkammer 12a" der Anschluß B.

In der Schaltstellung gemäß Fig. 2a nimmt der Kolben 2a seine Mittelstellung ein. Die beiden Hilfskolben 5a und 6a liegen mit ihren radial nach außen gerichteten Flanschen 8a und 9a an den radial nach innen gerichteten Schultern 10a, 11a des Gehäuses 1a an. Die Wegeventile 3, 4, 29 sind so geschaltet, daß das Hydraulikmedium in den Druckkammern 12a', 12a" und im Druckraum 13a jeweils unter Druck steht. Dadurch bleibt der Kolben 30 in der in Fig. 2a dargestellten Mittelstellung, wie dies anhand von Fig. 1 erläutert worden ist.

Um den Kolben 2a in die Schaltstellung gemäß Fig. 2b zu verschieben, wird der Druckraum 13a durch Umschalten des Wegeventiles 3 entlastet. Der Kolben 2a und der Hilfskolben 6a werden dann, wie anhand von Fig. 1 im einzelnen erläutert worden ist, in die Stellung gemäß Fig. 2b verschoben. Da die beiden Wegeventile 4, 29 in der Schaltstellung gemäß Fig. 2a bleiben, herrscht auf beiden Seiten des Kolbens 30 Systemdruck. Der Kolben 30 wird in seiner Anschlagstellung gehalten, in der er an einem Anschlag 32 des Gehäuses 1a anliegt. Beim Verschieben des Kolbens 2a tritt zwischen der Kolbenstange 14a und dem Kolben 30 infolge der dazwischen liegenden Dichtung eine axial wirkende Reibkraft auf, durch welche der Kolben 30 zusätzlich gegen den Anschlag 32 gedrückt wird. Der Hilfskolben 5a wird durch den in der Druckkammer 12a" herrschenden Druck in seiner Anschlagstellung gehalten, weil im Ringraum 76a Atmosphärendruck herrscht. Der Hilfskolben 5a liegt mit seinem radial nach außen gerichteten Ringflansch 8a an der radial nach innen gerichteten Schulter 10a des Gehäuses 1a an.

Soll der Kolben 2a aus der Lage gemäß Fig. 2a in eine dritte Schaltstellung gemäß Fig. 2c verschoben werden, wird lediglich das Wegeventil 4 umgeschaltet und damit die Druckkammer 12a" entlastet. Die beiden anderen Wegeventile 3 und 29 bleiben in ihrer Schaltstellung gemäß Fig. 2a, so daß das Hydraulikmedium in der Druckkammer 12a' und im Druckraum 13a unter Druck bleibt. Der Kolben 2a mit dem Hilfskolben 5a wird nunmehr, wie dies anhand von Fig. 1 beschrieben worden ist, in Fig. 2 nach links bis in die Stellung gemäß Fig. 2c verschoben. Der Kolben 2a wird so weit axial verschoben, bis der Ringteil 23a des Hilfskolbens 5a am Kolben 30 zur Anlage kommt. Da der Kolben 30 auf seiner der Druckkammer 12a' zugewandten Seite mit Systemdruck beaufschlagt ist und diese Kolbenseite größer ist als die beaufschlagte Ringschulter 20a des Kolbens 2a, kann der Kolben 30 nicht durch den Kolben 2a verschoben werden. Der Kolben 30 dient somit in dieser dritten Schaltstellung des Kolbens 2a als Anschlag für den Hilfskolben 5a und den Kolben 2a.

Falls der Kolben 2a aus der Stellung gemäß Fig. 2b in die Schaltstellung gemäß Fig. 2c verschoben werden soll, muß das Wegeventil 3 in die Schaltstellung gemäß Fig. 2a umgeschaltet werden, während das Wegeventil 4 so geschaltet wird, daß die Druckkammer 12a" entlastet ist. Dann wird der Kolben mit dem Hilfskolben 6a in der beschriebenen Weise in einem Zuge bis in die Schaltstellung gemäß Fig. 2c verschoben.

Um den Kolben 2a aus der Mittelstellung nach Fig. 2a in die vierte Schaltstellung gemäß Fig. 2d zu verschieben, werden die Wegeventile 29 und 4 so geschaltet, daß die Druckkammern 12a' und 12a" entlastet sind. Das Wegeventil 3 wird so geschaltet, daß das Hydraulikmedium im Druckraum 13a unter Druck gesetzt wird. Der Kolben 2a wird zusammen mit dem Hilfskolben 5a, wie dies anhand von Fig. 1 beschrieben worden ist, nach links verschoben. Da die Druckkammer 12a' entlastet ist und in der Druckkammer 12a" der Systemdruck herrscht, wird gleichzeitig mit Verschieben des Kolbens 2a auch der Kolben 30 nach links verschoben, bis er am Deckel 16a zur Anlage kommt.

Über die dem Deckel 16a zugewandte Seite des Kolbens 30 steht ein Vorsprung 31 axial vor, mit dessen ebener Stirnseite der Kolben 30 am Deckel 16a anliegt. Der Vorsprung 31 hat kleineren Außendurchmesser als der übrige Teil des Kolbens 30. Dadurch kann das Hydraulikmedium, das über den Anschluß C zugeführt wird, noch an die dem Deckel 16a zugewandte Seite des Kolbens 30 gelangen.

Der Hilfskolben 6a bleibt aufgrund des Druckes im Druckraum 13a und des Atmosphärendruckes im Ringraum 76a mit seinem radial nach außen gerichteten Flansch 9a in Anlage an der radial nach innen gerichteten Schulter 11a des Gehäuses 1a.

Soll der Kolben 2a aus der Stellung gemäß Fig. 2d in die Schaltstellung gemäß Fig. 2c gelangen, wird das Wegeventil 29 so geschaltet, daß in der Druckkammer 12a' Druck aufgebaut wird. Das Wegeventil 4 wird so geschaltet, daß die Druckkammer 12a" entlastet wird. Durch den in der Druckkammer 12a' herrschenden Druck wird der Kolben 30 nach rechts verschoben, bis er am Anschlag 32 zur Anlage kommt. Dieser Anschlag 32 wird beispielsweise durch einen Sicherungsring gebildet, der in eine Ringnut in der Wandung der Druckkammer 12a" eingelegt ist. Da der Hilfskolben 5a mit seinem Ringteil 23a am Kolben 30 anliegt, wird der Hilfskolben 5a und damit auch der Kolben 2a nach rechts verschoben, bis die Schaltstellung gemäß Fig. 2c erreicht ist, in welcher der Kolben 30 am Anschlag 32 anliegt. Der Außendurchmesser des radial nach außen gerichteten Flansches 8a des Hilfskolbens 5a ist kleiner als der Innendurchmesser des Anschlages 32, so daß der Hilfskolben über den Anschlag 32 verschoben werden kann.

Die Kolbenstange 15a ragt wie bei der vorigen Ausführungsform in das Gehäuse 17a des Wegmeßsystems 26a. Es ist vorteilhaft als Potentiometer ausgebildet und hat wenigstens die eine Leiterbahn 27a, an der der Schleifer 28a des Kolbens 2a anliegt.

Um bei einem Schaltgetriebe mit zentraler Schaltwelle eines Kraftfahrzeuges die verschiedenen Gänge schalten zu können, werden zwei Stellantriebe zusammengefaßt, von denen der eine Stellantrieb für die Gassenwahl und der andere Stellantrieb zum Einlegen der Gänge dient.

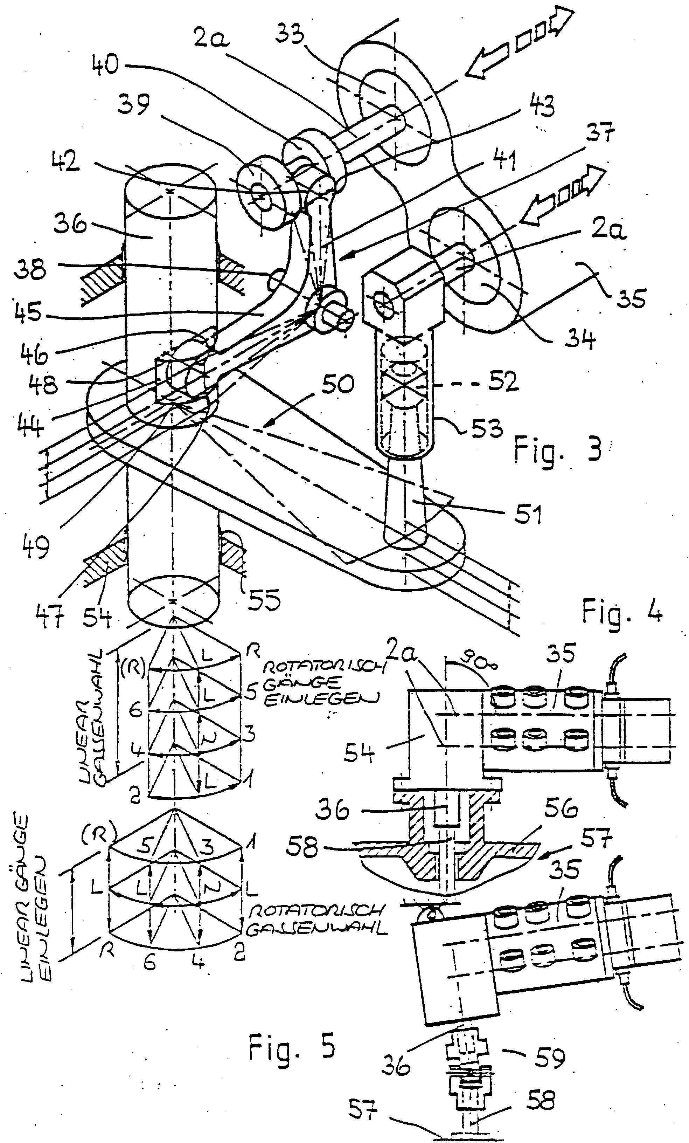

Bei der Ausführungsform gemäß Fig. 3 sind zwei Stellantriebe 33 und 34 parallel zueinander in einem gemeinsamen Gehäuse 35 untergebracht. Die beiden Stellantriebe 33, 34 sind entsprechend der Ausführungsform gemäß Fig. 2 ausgebildet, so daß mit ihnen vier unterschiedliche Schaltstellungen eingestellt werden können. Da die beiden Stellantriebe 33, 34 parallel zueinander liegen, ergibt sich eine äußerst kompakte Bauform, so daß dieses Stellantriebssystem platzsparend im Kraftfahrzeug untergebracht werden kann. Dieses Stellantriebssystem eignet sich überall dort, wo nur wenig Einbauraum zur Verfügung steht.

Die beiden Kolben 2a der Stellantriebe 33, 34 ragen aus dem Gehäuse 35. Die beiden Stellantriebe 33, 34 wirken auf eine gemeinsame Welle 36, die mit der Schaltwelle des in Fig. 3 nicht dargestellten Schaltgetriebes gekuppelt wird. Der Stellantrieb 33 dient dazu, die Welle 36 für die jeweilige Gassenwahl axial zu verschieben, während der Stellantrieb 34 dazu herangezogen wird, die Welle 36 in der jeweils ausgewählten Gasse um ihre Achse zu drehen und so die Gänge einzulegen. Dies ist in Fig. 3 durch ein entsprechendes Diagramm schematisch dargestellt.

Die Verbindung des Kolbens 2a mit der Welle 36 erfolgt über einen Winkelhebel 37, der um eine senkrecht zu den Achsen der Kolben 2a und zur Achse der Welle 36 liegende Achse 38 schwenkbar gelagert ist. Der eine Kolben 2a ist an seinem außerhalb des Gehäuses 35 liegenden Ende mit zwei mit axialem Abstand voneinander vorgesehenen Ringbunden 39 und 40 versehen, die kreisförmigen Umriß haben und zwischen die das freie Ende des einen Armes 41 des Winkelhebels 37 eingreift. Das freie Ende dieses Armes 41 ist so breit, daß es dem Abstand zwischen den beiden Ringbunden 39 und 40 entspricht. Die einander gegenüberliegenden Seiten 42 und 43, mit denen der Arm 41 an den einander zugewandten Innenseiten der Ringbunde 39, 40 anliegt, sind kreissegmentförmig abgerundet.

Die Welle 36 weist eine Aussparung 44 auf, in welche der andere Arm 45 des Winkelhebels 37 mit seinem freien Ende eingreift. Der Arm 45 liegt mit kreisbogenförmig gekrümmten Seiten 46 und 47 an den axial einander gegenüberliegenden Wandungen 48 und 49 der Aussparung 44 an. Aufgrund der kreisbogenförmig gekrümmten Seiten 42, 43 und 46, 47 können die freien Enden der Arme 41, 45 des Winkelhebels 37 bei dessen Schwenkbewegung an den Ringbunden 39, 40 sowie an den Wandungen 48, 49 eine Gleitbewegung mit Linienberührung ausführen, so daß der Kolben 2a und die Welle 36 zuverlässig axial verschieben können. Bei der Schwenkbewegung des Winkelhebels 36 erfolgt eine Relativbewegung zwischen den freien Enden der Arme 41, 45 des Winkelhebels 37 und den Ringbunden 39, 40 sowie den Wandungen 48, 49 der Aussparung 44.

Die freien Enden der Arme 41, 45 des Winkelhebels 37 können bei einer (nicht dargestellten) Ausführungsform auch kugelförmig ausgebildet sein. Die freien Armenden liegen dann lediglich unter Punktberührung an den Ringbunden 39, 40 und an den Wandungen 48, 49 der Aussparung 44 an.

Auf der Welle 36 sitzt drehfest und axial unverschieblich eine hebelförmige Lasche 50, die sich radial von der Welle 36 aus erstreckt und an ihrem freien Ende einen Mitnehmer 51 trägt. Er steht senkrecht von der Lasche 50 ab und erstreckt sich parallel zur Welle 36. Der Mitnehmer 51 trägt an seinem freien Ende eine Kugel 52, die in einer Buchse 53 liegt, die am freien Ende des anderen Kolbens 2a drehbar gelagert ist. Die Buchse 53 liegt senkrecht zum Kolben 2a und ist in Richtung auf die Lasche 50 offen. Die Kugel 52 liegt an der Innenwandung der Buchse 53 an.

Der mit dem Winkelhebel 37 gekuppelte Kolben 2a dient dazu, die verschiedenen Gassen des Schaltgetriebes auszuwählen. Bei dieser Gassenauswahl befindet sich der buchsenseitige Kolben 2a in seiner Mittelstellung, wie sie anhand der Fig. 1a und 2a erläutert worden ist. Der winkelhebelseitige Kolben 2a wird, wie dies anhand der Fig. 2 im einzelnen erläutert worden ist, axial in die für die jeweilige Gassenwahl notwendige Stellung axial verschoben. Hierbei wird der Winkelhebel 37 infolge der Kupplung des Armes 41 mit dem Kolben 2a um die Achse 38 geschwenkt. Dies hat zur Folge, daß die Welle 36 durch den Winkelhebelarm 45 entsprechend axial verschoben wird. Die Lasche 50 mit dem Mitnehmer 51 wird entsprechend in Achsrichtung der Welle 36 mitgenommen, wobei die Kugel 52 innerhalb der Buchse 53 axial zu ihr verschoben wird. Die Buchse 53 ist selbstverständlich so lang, daß in sämtlichen Schaltstellungen des Kolbens 2a die Kugel 52 noch innerhalb der Buchse 53 liegt. Außerdem ist die Buchse 53 so gestaltet, daß die Kugel 52 nicht am Boden der Buchse anliegt, wenn der Kolben 2a am weitesten eingefahren und dementsprechend die Welle 36 am weitesten nach oben verschoben ist, bezogen auf die Darstellung gemäß Fig. 3.

Der buchsenseitige Kolben 2a wird nach der Gassenwahl ebenfalls axial in die jeweils erforderliche Schaltstellung verschoben. Hierbei wird über die Lasche 50 und den Mitnehmer 51 die Welle 36 um ihre Achse gedreht und damit der entsprechende Gang eingelegt. Da die Kugel 52 nur Punktberührung mit der Innenwandung der Buchse 53 hat, ist die Schwenkbewegung ohne Schwierigkeiten möglich. Bei dieser Schwenkbewegung wird die Buchse 53 gegenüber ihrem Kolben 2a geschwenkt. Es ist auch möglich, die Buchse 53 mit ihrem Kolben 2a fest zu verbinden, so daß in diesem Falle auch der Kolben 2a um seine Achse gedreht wird. Damit beim Drehen der Schaltwelle 36 das freie Ende des Winkelhebelarms 45 nicht mit dem axial verlaufenden Boden der Aussparung 44 in Berührung kommt, ist das freie Armende so in der Aussparung 44 angeordnet bzw. ist die Aussparung so ausgebildet, daß in jeder Drehstellung der Welle 36 eine Berührung zwischen dem freien Armende und dem Boden der Aussparung 44 vermieden wird. In gleicher Weise ist der Mitnehmer 51 im Durchmesser so gestaltet, daß eine Berührung mit der Buchse 53 ausgeschlossen ist. Der Mitnehmer 51 ist aus diesem Grunde vorzugsweise kegelförmig verjüngt ausgebildet.

In Fig. 3 sind im oberen Diagramm die Gassen des Schaltgetriebes sowie die jeweiligen Gänge dargestellt. Die Gassenwahl erfolgt durch Linearverschieben der Welle 36, während die Gangwahl durch eine rotatorische Bewegung der Welle 36 ausgeführt wird.

Wie sich aus dem unteren Schaltdiagramm der Fig. 3 ergibt, ist es bei dem beschriebenen Stellantriebssystem aber auch möglich, die Gassenwahl durch die Drehbewegung der Welle 36 und die Gangwahl durch lineares Verschieben der Welle 36 vorzunehmen. Dies hängt vom Aufbau des jeweiligen Schaltgetriebes ab. In diesem Fall wird durch Axialverschieben des buchsenseitigen Kolbens 2a zur Gassenwahl die Schaltwelle 36 um ihre Achse gedreht. Hierbei befindet sich der winkelhebelseitige Kolben 2a in seiner Mittelstellung entsprechend den Fig. 1a bzw. 2a. Anschließend wird durch Axialverschieben des winkelhebelseitigen Kolbens 2a der gewünschte Gang eingelegt.

Die beschriebene kinematische Kupplungsverbindung der beiden Kolben 2a des Stellantriebssystems ist in einem in Fig. 3 nur schematisch angedeuteten Gehäuse 54 untergebracht, an welches das Gehäuse 35 angeschlossen ist. Die Welle 36 ragt durch eine Öffnung 55 in dieses Gehäuse 54.

Im dargestellten Ausführungsbeispiel ist die Welle 36 eine Zwischenwelle, die ihrerseits erst an die Schaltwelle des Schaltgetriebes angeschlossen wird. Eine solche Ausführungsform zeigt schematisch Fig. 4. Das Gehäuse 35 enthält die beiden (nicht dargestellten) Kolben 2a, die innerhalb des Gehäuses 54 miteinander kinematisch gekuppelt sind. Die Welle 36 liegt wie beim Ausführungsbeispiel nach Fig. 3 rechtwinklig zu den Achsen der Kolben 2a und ragt aus dem Gehäuse 54. Das Gehäuse 54 ist an ein Gehäuse 56 des Schaltgetriebes 57 angeschlossen. Dessen Schaltwelle 58 ist unmittelbar mit der Welle 36 verbunden.

Die Welle 36 kann aber auch die Schaltwelle des Schaltgetriebes sein. Eine Zwischenwelle ist dann nicht erforderlich. Die kinematische Kupplungseinrichtung wirkt in diesem Fall unmittelbar mit der Schaltwelle zusammen.

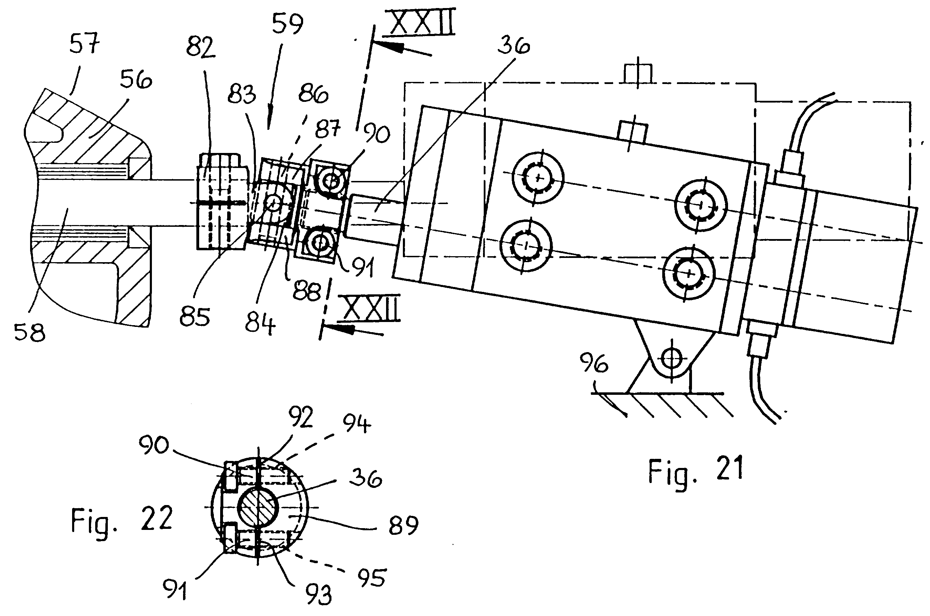

Fig. 5 zeigt eine Ausführungsform, bei der die Welle 36 über ein Kardangelenk 59 mit der Schaltwelle 58 des Schaltgetriebes 57 gekuppelt ist. Aufgrund des Kardangelenkes 59 kann die Welle 36 winklig zur Schaltwelle 58 angeordnet sein. Im dargestellten Ausführungsbeispiel ist das Gehäuse 35 mit seiner Achse winklig zur Achse der Schaltwelle 58 angeordnet. Das Kardangelenk 59 hat darüber hinaus den Vorteil, daß beim Einbau des Stellantriebssystems nicht auf eine genau fluchtende Lage von Welle 36 und Schaltwelle 58 geachtet werden muß. Dadurch ist eine einfache Montage des Stellantriebssystems ohne Justagearbeiten gewährleistet. Dies wird anhand der Fig. 21 und 22 näher erläutert werden.

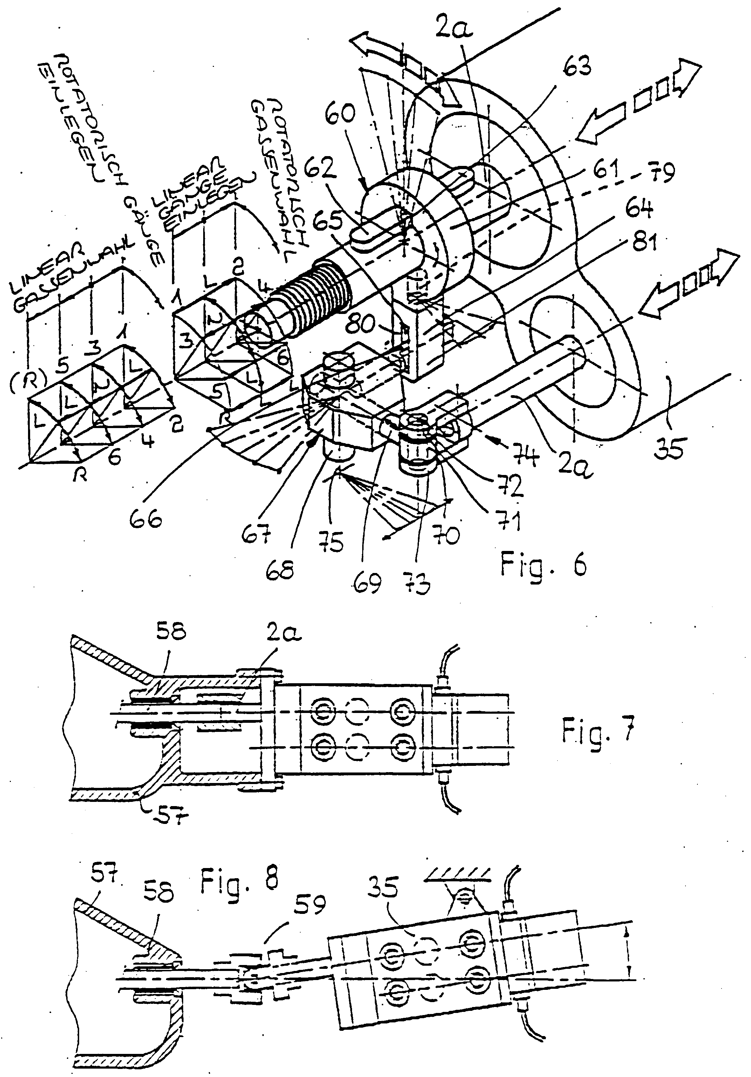

Fig. 6 zeigt eine weitere Möglichkeit, die beiden Kolben 2a zweier zu einem Stellantriebssystem zusammengefaßter Stellantriebe miteinander kinematisch zu kuppeln. Die beiden Kolben 2a sind im gemeinsamen Gehäuse 35 parallel zueinander liegend untergebracht. Auf dem einen Kolben 2a sitzt mit einem Ringteil 61 drehfest ein Mitnehmer 60, der im Gehäuse 54 (Fig. 3) axial unverschieblich gelagert ist. Der Kolben 2a ist mit einer Paßfeder 62 versehen, die in eine entsprechende Nut 63 des Ringteils 61 eingreift und zur Drehsicherung dient. Radial vom Ringteil 61 steht ein Arm 64 ab, der eine Durchgangsöffnung 65 aufweist. Durch sie ragt ein Arm 66 eines Grundkörpers 67, der auf einer senkrecht zu den Kolben 2a liegenden Achse 68 gelagert ist. Der Arm 66 ist um seine Achse drehbar im Grundkörper 67 gelagert. Der Arm 64 ist als Ring ausgebildet, der um eine senkrecht zum Kolben 2a liegende Achse 79 gegenüber dem Ringteil 61 drehbar ist. Die Durchgangsöffnung 65 des Arms 64 wird von zueinander parallelen Seitenwänden 80 und 81 begrenzt, die an den abgeflachten Seiten des Armes 66 anliegen.

Vom Grundkörper 67 steht ein weiterer Arm 69 ab, der rechtwinklig zum Arm 66 und somit rechtwinklig zu den Kolben 2a liegt. Der Arm 69 ist in seiner Achsrichtung verschiebbar im Grundkörper 67 gelagert. Das freie Ende des Armes 69 weist ein Lagerauge 70 auf, durch das ein Bolzen 71 ragt. Seine Enden sind in zwei Schenkeln 72, 73 einer Gabel 74 befestigt, die auf dem Kolben 2a außerhalb des Gehäuses 35 befestigt ist.

Die beiden Kolben 2a werden in der beschriebenen Weise in die jeweiligen Schaltstellungen axial verschoben. Durch Axialverschieben des mit dem Mitnehmer 60 versehenen Kolbens 2a wird der jeweilige Gang des Schaltgetriebes eingelegt. Jeder Schaltstellung des Kolbens 2a entspricht ein Gang des Schaltgetriebes. Mit dem mit der Gabel 74 versehenen Kolben 2a wird die jeweilige Gasse ausgewählt. Wird dieser Kolben 2a in der beschriebenen Weise axial in seine jeweilige Schaltstellung verschoben, wird über den Arm 69 der Grundkörper 67 um die Längsmittellinie 75 der Achse 68 gedreht. Da sich der Arm 69 in seiner Längsrichtung gegenüber dem Grundkörper 67 verschieben kann, ist der für die Schwenkbewegung erforderliche Längenausgleich ohne weiteres möglich. Der andere Arm 66 des Grundkörpers 67 wird in entsprechendem Maße verschwenkt, wobei über den Mitnehmer 60 der Kolben 2a in seiner Mittelstellung (Fig. 1a und 2a) um seine Achse gedreht wird. Diese Drehbewegung ist wiederum ohne weiteres möglich, da der Arm 66 um seine Achse drehbar im Grundkörper 67 gelagert und der Arm 64 um die Achse 79 gegenüber dem Ringteil 61 drehbar ist. Bei dieser Drehbewegung des Kolbens 2a und damit der Schwenkbewegung des Mitnehmers 60 tritt eine Relativbewegung zwischen den Seitenwänden 80, 81 des Armes 64 und dem Arm 66 auf.

Der mit dem Mitnehmer 60 versehene Kolben 2a kann unmittelbar an die Schaltwelle des Schaltgetriebes angeschlossen werden. Dies ist beispielhaft in Fig. 7 dargestellt. Im Gegensatz zum Ausführungsbeispiel nach den Fig. 4 und 5 liegt die Schaltwelle 58 des Schaltgetriebes 57 parallel zu den Kolben 2a und fluchtend zu dem einen Kolben. Es ist selbstverständlich auch möglich, an den mitnehmerseitigen Kolben 2a eine Zwischenwelle anzuschließen, die ihrerseits mit der Schaltwelle 58 des Schaltgetriebes 57 gekuppelt wird.

Bei dem Stellantriebssystem nach Fig. 6 ist es selbstverständlich möglich, die Gangwahl über den gabelseitigen Kolben 2a durchzuführen. Da die Axialverschiebung dieses Kolbens über den Grundkörper 67 zu einer Drehbewegung des anderen Kolbens 2a führt, wird auf diese Weise die Gangwahl durch eine Drehbewegung dieses mitnehmerseitigen Kolbens 2a vorgenommen. Durch Axialverschieben des mitnehmerseitigen Kolbens 2a wird die jeweilige Gasse ausgewählt. Bei dieser Gassenwahl befindet sich der mitnehmerseitige Kolben 2a in seiner Mittelstellung, wie sie anhand der Fig. 1a bzw. 2a erläutert worden ist. Eine solche Ausbildung ist bei einem entsprechend aufgebauten Schaltgetriebe vorgesehen.

Der Arm 69 läßt sich über sein Lagerauge 70 einfach auf dem Bolzen 71 der Gabel 74 schwenken. In Verbindung mit der axialen Verschiebung des Arms 69 im Grundkörper 67 ist in jeder Schaltstellung des zugehörigen Kolbens 2a eine einwandfreie Funktion sichergestellt.

Fig. 8 zeigt eine Ausführungsform, bei der die Schaltwelle 58 des Schaltgetriebes 57 über das Kardangelenk 59 mit dem Stellantriebssystem gekuppelt ist. Dadurch kann das Gehäuse 35 dieses Stellantriebssystems mit seiner Längsachse winklig zur Schaltwelle 58 liegen.

Bei sämtlichen beschriebenen Ausführungsformen können für das Stellantriebssystem je nach Ausbildung des nachgeschalteten Schaltgetriebes 57 die Stellantriebe gemäß Fig. 1 oder gemäß Fig. 2 eingesetzt werden.

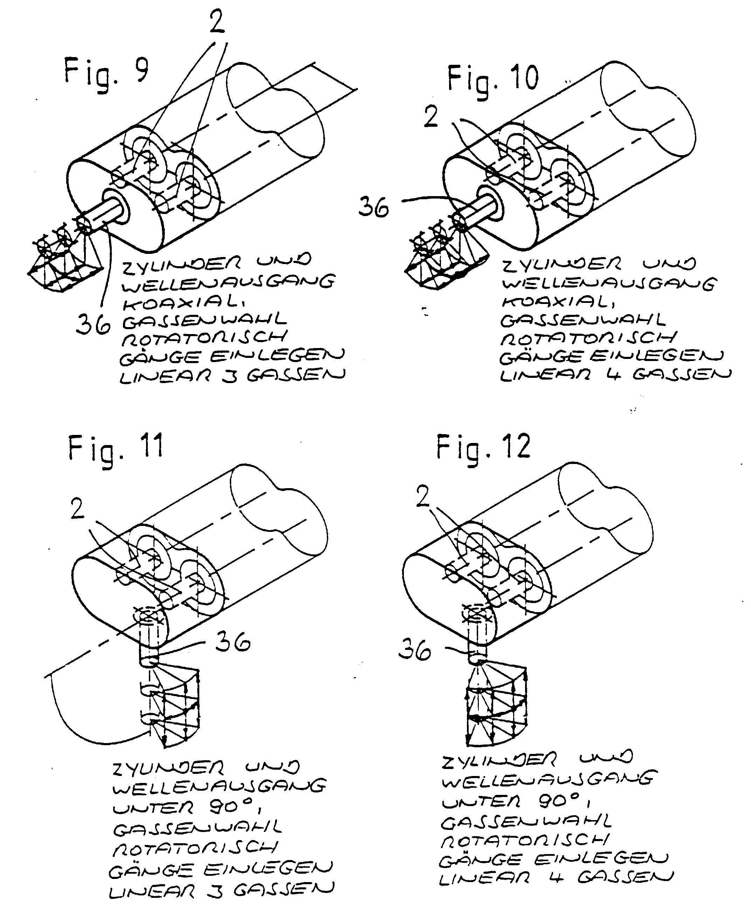

Die Fig. 9 bis 20 zeigen beispielhaft die unterschiedlichsten Ausgestaltungen von Stellantriebssystemen, denen jeweils gemeinsam ist, daß die Kolben der Stellantriebe parallel zueinander liegen. Die Verbindung der beiden Kolben der Stellantriebe ist in diesen Figuren nicht mehr dargestellt. Sie kann, wie dies anhand der Fig. 3 und 6 beschrieben worden ist, erfolgen. Es sind aber selbstverständlich auch andere geeignete kinematische Kupplungsmöglichkeiten zwischen den parallel zueinander liegenden Kolben möglich.

Fig. 9 zeigt ein Stellantriebssystem, bei dem die Welle 36 parallel zu den Kolben 2 verläuft. Die Welle kann eine Zwischenwelle sein, über die das Stellantriebssystem mit der Schaltwelle 58 des Schaltgetriebes 57 gekuppelt wird. Die Welle kann aber auch die Schaltwelle des Schaltgetriebes sein.

Die Welle 36 gemäß Fig. 9 wird zur Gassenwahl um ihre Achse gedreht und zum Einlegen der jeweiligen Gänge axial verschoben. Die verschiedenen Schaltstellungen sind in Fig. 9 dargestellt. Die verschiedenen Gassen und die unterschiedlichen Gänge ergeben sich aus dem zugehörigen Schaltdiagramm.

Bei der Ausführungsform nach Fig. 10 ist die Welle 36 wiederum parallel zu den Kolben 2 angeordnet. Das Schaltgetriebe hat vier Gassen, so daß durch Drehen der Welle 36 vier verschiedene Stellungen erreicht werden können. Um die jeweiligen Gänge in den ausgewählten Gassen einzulegen, wird die Welle 36 entsprechend axial verschoben.

Beim Stellantriebssystem nach Fig. 11 liegt die Welle 36 senkrecht zu den beiden parallel zueinander liegenden Kolben. Zur Gassenwahl wird die Welle 36 um ihre Achse gedreht. Um die jeweiligen Gänge einzulegen, wird die Welle 36 axial verschoben. Das Schaltgetriebe hat drei Gassen, so daß die Welle 36 in drei verschiedene Stellungen gedreht werden kann.

Bei der Ausführungsform nach Fig. 12 können durch Drehen der Welle 36 vier Gassen ausgewählt werden. Die Gänge in den ausgewählten Gassen werden wiederum durch Axialverschieben der Welle 36 eingelegt.

Bei den beschriebenen Stellantriebssystemen sind die Kräfte, die auf die Welle 36 wirken, in Zuordnung zur Gassenwahl und zum Gangeinlegen stark unterschiedlich. Es besteht ein Verhältnis von etwa 1 bis zu 6. Dieses Verhältnis wird nicht durch eine Druckreduzierung für die Gassenwahl erzeugt. Die beiden Kolben der Stellantriebssysteme sind unmittelbar an dasselbe hydraulische Versorgungssystem angeschlossen. Um Druckreduzierventile zu vermeiden, sind die wirksamen Flächen an denjenigen Kolben, die für die Gassenwahl zuständig sind, entsprechend minimiert. Derjenige Stellantrieb, der zum Einlegen der Gänge verwendet wird, muß wegen der Synchronisierung wesentlich höhere Kräfte aufbringen als derjenige Stellantrieb, mit dem lediglich die Gassen ausgewählt werden. Aus diesem Grunde sind die Stellantriebe für das Einlegen der Gänge im Hinblick auf die wirksamen Flächen stärker dimensioniert. Im übrigen sind aber die Stellantriebe für die Gassenwahl und das Einlegen der Gänge baugleich ausgeführt.

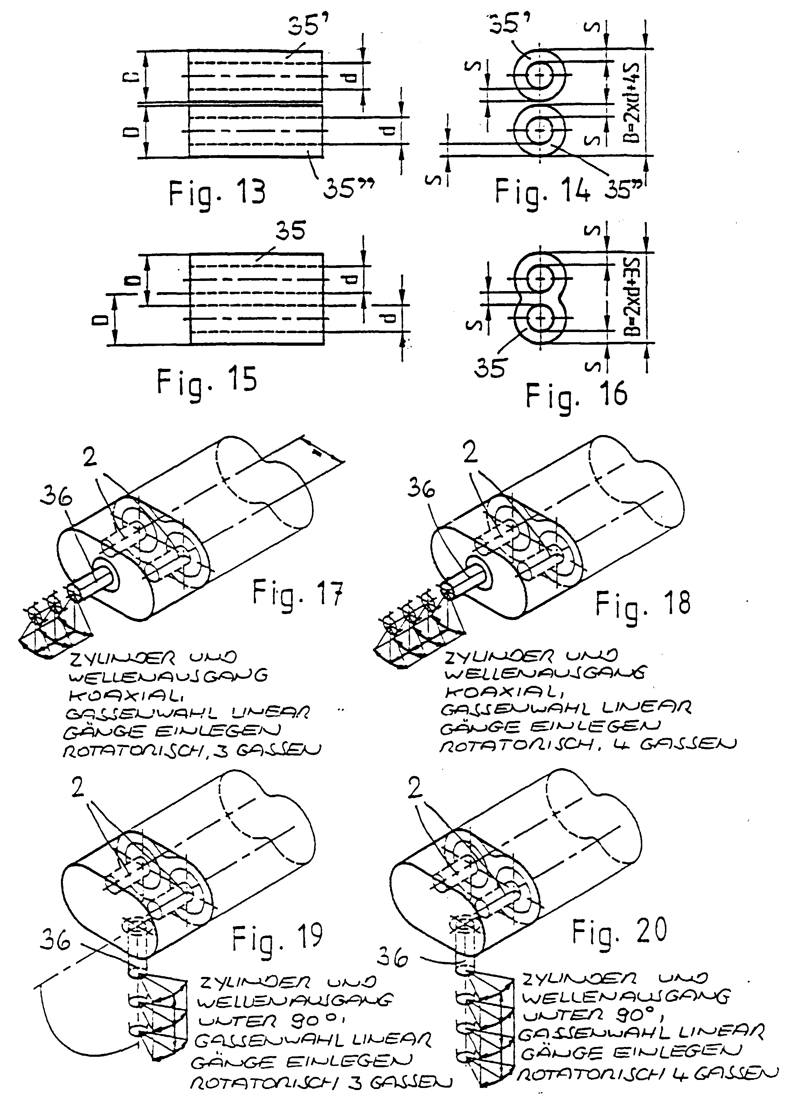

Die Fig. 13 und 14 zeigen eine Ausführungsform, bei der für die beiden Stellantriebe des Stellantriebssystems zwei getrennte Gehäuse 35' und 35'' verwendet werden. In dem Bereich, in dem die beiden Gehäuse aneinanderliegen, besteht die doppelte Wanddicke der Gehäuse. Dadurch baut das Stellantriebssystem mit zwei getrennten Gehäusen 35', 35'' verhältnismäßig groß. Bei einer Wanddicke s und einem Durchmesser d der Axialbohrung des Gehäuses beträgt die Gesamthöhe B des Stellantriebssystems 2d + 4s.

Bei der Ausführungsform nach den Fig. 15 und 16 sind die beiden Gehäuse zu dem einzigen Gehäuse 35 zusammengefaßt. Die Gesamthöhe B beträgt hier nur noch 2d + 3s. Dadurch ist ein Stellantriebssystem mit einem solchen gemeinsamen Gehäuse 35 wesentlich kompakter als die Ausführungsform nach den Fig. 13 und 14.

Die Fig. 17 bis 20 zeigen Stellantriebssysteme, bei denen - im Gegensatz zu den Ausführungsformen nach den Fig. 9 bis 12 - die Gassenwahl durch Axialverschieben der Welle 36 erfolgt und die Gänge durch Drehen der Welle ausgewählt werden.

Beim Ausführungsbeispiel nach Fig. 17 liegt die Welle 36 wiederum parallel zu den Kolben 2. Durch Axialverschieben der Welle 36 wird die jeweilige Gasse ausgewählt. Anschließend wird die Welle 36 um ihre Achse gedreht, um den jeweiligen Gang einzulegen. Dieses Stellantriebssystem wird für Schaltgetriebe eingesetzt, die drei Gassen haben.

Das Stellantriebssystem gemäß Fig. 18 wird für Schaltgetriebe verwendet, die vier Gassen haben. Die Welle 36 liegt wiederum parallel zu den Kolben 2 und kann durch Axialverschieben in vier unterschiedliche Schaltstellungen verstellt werden. Auf diese Weise wird die jeweilige Gasse ausgewählt. Anschließend wird die Welle 36 um ihre Achse gedreht, um den jeweiligen Gang einzulegen.

Beim Ausführungsbeispiel nach Fig. 19 liegt die Welle 36 senkrecht zu den Kolben 2. Die Gassenwahl erfolgt durch Axialverschieben der Welle 36, während die Gänge durch Drehen der Welle eingelegt werden. Dieses Stellantriebssystem wird für Schaltgetriebe mit drei Gassen verwendet.

Das Stellantriebssystem gemäß Fig. 20 wird für Schaltgetriebe eingesetzt, die vier Gassen haben. Auch bei diesem Ausführungsbeispiel liegt die Welle 36 senkrecht zu den Kolben 2. Die Welle 36 kann zur Gassenwahl in vier unterschiedliche Stellungen axial verschoben werden. Durch Drehen um ihre Achse wird der jeweilige Gang eingelegt.

Anhand der Fig. 21 und 22 soll die Ausbildung des Kardangelenkes 59 näher beschrieben werden, mit welcher die Welle 36 mit der Schaltwelle 58 des Schaltgetriebes 57 gekuppelt werden kann. Das Kardangelenk 59 hat ein auf dem freien Ende der Schaltwelle 58 befestigtes Gabelstück 82, das in geeigneter Weise, beispielsweise durch Schrauben, mit der Schaltwelle 58 verbunden ist. Zwischen den Gabelschenkeln, von denen in Fig. 21 nur der eine Gabelschenkel 83 dargestellt ist, liegt ein quaderförmiges Kupplungsstück 84, das mit Bolzen 85 in den Gabelschenkeln drehbar gelagert ist. Das Kupplungsstück 84 wird von einem weiteren Bolzen 86 durchsetzt, der senkrecht zu den Bolzen 85 liegt und in Gabelschenkeln 87 und 88 eines zweiten Gabelstückes 89 gelagert ist. Das Kupplungsstück 84 wird somit an vier rechtwinklig zueinander liegenden Seiten von den Schenkeln 83 und 87, 88 der beiden Gabelstücke 82 und 89 umfaßt.

Das Gabelstück 89 ist im Bereich außerhalb der Gabelschenkel 87, 88 mit einem Innengewinde versehen, mit dem es auf das freie Ende der Welle 36 geschraubt werden kann. Sobald die Montagelage des Stellantriebssystems erreicht ist, wird das Gabelstück 89 auf der Welle 36 mit zwei Schrauben 90, 91 festgeklemmt. Sie erstrecken sich senkrecht zu den Schlitzen 92 und 93 des Gabelstückes 89, das mit entsprechenden Gewindebohrungen 94 und 95 versehen ist. Die Köpfe der Schrauben 90, 91 liegen vorteilhaft versenkt im Gabelstück 89.

Die Verwendung des Kardangelenkes 59 hat den Vorteil, daß das Stellantriebssystem in jedem räumlichen Winkel relativ zur Schaltwelle 58 des Schaltgetriebes 57 ohne Berücksichtigung von Toleranzen an Bauteilen und ohne Justagearbeiten einfach gekuppelt und montiert werden kann. Bei der Montage wird zunächst die Schaltwelle 58 des Schaltgetriebes 57 in eine zentrierte Neutralstellung gebracht. Die beiden Kolben des Stellantriebssystems werden in eine der Neutralstellung des Schaltgetriebes 57 entsprechende Stellung geschaltet. Die Neutralstellung bzw. die entsprechenden zugehörigen Stellungen der Kolben des Stellantriebssystems sind identisch mit den anhand der Fig. 1 und 2 beschriebenen Schaltstellungen der Kolben, die durch eine geeignete Ventilanwahl sehr einfach geschaltet werden können. Das Kardangelenk 59 wird mit seinem Gabelstück 89 auf der Welle 36 vormontiert, ohne daß die Schrauben 90, 91 angezogen sind. Das Stellantriebssystem wird in der in Fig. 21 mit strichpunktierten Linien angedeuteten Lage gegen das Schaltgetriebe 57 bewegt und das Gabelstück 82 auf die Schaltwelle 58 geschoben und anschließend in geeigneter Weise formschlüssig mit ihr verbunden. Da das andere Gabelstück 89 noch nicht auf die Welle 36 geklemmt ist, kann nunmehr das Stellantriebssystem um seine Achse gedreht und außerdem um die Achse der Bolzen 85 geschwenkt werden. Auf diese Weise läßt sich das Stellantriebssystem ohne Schwierigkeiten in seine genaue Einbaulage bringen. Das Stellantriebssystem wird an einem Gehäuse 96 befestigt, das mit dem Getriebegehäuse 56 fest verbunden ist. Nach der Anbindung des Stellantriebssystems an das Gehäuse 96 werden die Schrauben 90, 91 angezogen und auf diese Weise das Gabelstück 89 drehfest und axial unverschieblich mit der Welle 36 verbunden.

## Patentansprüche

1. Stellantrieb für Schaltgetriebe von Kraftfahrzeugen, mit einem Gehäuse (1, 1a), in dem ein durch ein Hydraulikmedium beaufschlagbares Stellteil (2, 2a), vorzugsweise ein Kolben, in verschiedene Schaltstellungen axial verschiebbar ist, auf dem zwei, jeweils wenigstens einen Druckraum (12, 13; 12a, 13a) mit Anschlüssen (A, B, C) teilweise begrenzende, Hilfskolben (5, 6; 5a, 6a) gelagert sind, die durch das Hydraulikmedium beaufschlagbar sind, zu denen das Stellteil (2, 2a) relativ verschiebbar ist und die an ihren voneinander abgewandten Enden jeweils wenigstens einen an einem Flansch vorgesehenen ersten Anschlag (8, 9; 8a, 9a), mit dem sie in einer Stellung an wenigstens einem gehäuseseitigen Gegenanschlag (10, 11; 10a, 11a) anliegen, wenigstens einen zweiten Anschlag (21, 22; 21a, 22a), der im Bewegungsweg wenigstens eines Gegenanschlages (19, 20; 19a, 20a) des Stellteiles (2, 2a) liegt, und wenigstens einen dritten Anschlag (23, 24; 23a, 24a) aufweisen, der an den Flanschen der Hilfskolben (5, 6; 5a, 6a) vorgesehen ist,
dadurch gekennzeichnet, daß die an den voneinander abgewandten Enden der Hilfskolben (5, 6; 5a, 6a) vorgesehenen, die zweiten und dritten Anschläge (23, 24; 23a, 24a; 23, 24; 23a, 24a) aufweisenden Flansche radial nach innen gerichtet sind, und daß die einander zugewandten Enden der Hilfskolben (5, 6; 5a, 6a) einen Ringraum (76, 76a) begrenzen, der das Stellteil (2, 2a) umgibt und mit der Atmosphäre verbunden ist.

2. Stellantrieb nach Anspruch 1,
dadurch gekennzeichnet, daß der gehäuseseitige Gegenanschlag (10, 11; 10a, 11a) für den ersten Anschlag (8, 9; 8a, 9a) eine radial nach innen gerichtete Schulter in der Innenwandung des Gehäuses (1; 1a) ist.

3. Stellantrieb nach Anspruch 1 oder 2,
dadurch gekennzeichnet, daß der zweite Anschlag (21, 22; 21a, 22a) eine durch das Druckmedium beaufschlagbare Kolbenfläche des radial nach innen gerichteten Flansches der Hilfskolben (8, 9; 8a, 9a) ist.

4. Stellantrieb nach einem der Ansprüche 1 bis 3,
dadurch gekennzeichnet, daß der dem zweiten Anschlag (21, 22; 21a, 22a) zugeordnete Gegenanschlag (19, 20; 19a, 20a) des Stellteiles (2; 2a) eine vom Druckmedium beaufschlagbare Kolbenfläche ist.

5. Stellantrieb nach einem der Ansprüche 1 bis 4,
dadurch gekennzeichnet, daß der zweite Anschlag (21, 22; 21a, 22a) der Hilfskolben (5, 6; 5a, 6a) in der Anschlagstellung den Gegenanschlag (19, 20; 19a, 20a) des Stellteiles (2; 2a) teilweise abdeckt.

6. Stellantrieb nach einem der Ansprüche 1 bis 5,
dadurch gekennzeichnet, daß der dritte Anschlag (23, 24; 23a, 24a) ein Ringteil ist, der einen verjüngten Abschnitt (14, 15; 14a, 15a) des Stellteiles (2; 2a) mit Abstand umgibt.

7. Stellantrieb nach einem der Ansprüche 1 bis 6,
dadurch gekennzeichnet, daß im einen Druckraum (12a) ein weiterer Kolben (30) untergebracht ist, der den Druckraum (12a) in zwei voneinander getrennte Druckkammern (12a', 12a") unterteilt, die vorteilhaft unabhängig voneinander mit Druckmedium beaufschlagbar sind.

8. Stellantrieb nach Anspruch 7,
dadurch gekennzeichnet, daß der weitere Kolben (30) in einer Mittelstellung unter Druck an wenigstens einem gehäuseseitigen, vorteilhaft als Sprengring ausgebildeten Anschlag (32) anliegt.

9. Stellantrieb nach einem der Ansprüche 1 bis 8,
dadurch gekennzeichnet, daß zur Erfassung der Axiallage des Stellteiles (2; 2a) ein Wegmeßsystem (26; 26a) vorgesehen ist, das vorzugsweise ein Potentiometer aufweist, das wenigstens eine Leiterbahn (27) hat, an der ein Schleifer (28) des Stellteiles (2; 2a) anliegt.

10. Stellantrieb nach einem der Ansprüche 1 bis 9,
dadurch gekennzeichnet, daß das Stellteil (2; 2a) mit einer Schaltwelle (58) des Schaltgetriebes (57) kuppelbar ist.

## Claims

1. An actuator drive for gearboxes of motor vehicles, with a housing (1, 1a), in which a setting member (2, 2a), preferably a piston, is axially displacable into different shifting positions, which [setting member (2, 2a)] can be acted upon by an hydraulic medium and on which are mounted two auxiliary pistons (5, 6; 5a, 6a) which each bound in part at least one respective compression space (12, 13; 12a, 13a) with connexions (**A, B, C**) and which can be acted upon by the hydraulic medium and relative to which the setting member (2, 2a) is displaceable and which at their ends remote from each other are each provided with at least one first stop (8, 9; 8a, 9a), which is provided on a flange and by which they rest in one position against at least one counter stop (10, 11; 1a, 1a) on the housing, at least one second stop (21, 22; 21a, 22a). which is situated in the path of movement of at least one counter stop (19, 20; 19a, 20a) of the setting member (2, 2a), and at least one third stop (23, 24; 23a, 24a), which is provided on the flanges of the auxiliary pistons (5, 6; 5a, 6a), **characterized in that** the flanges, which are provided on the mutually remote ends of the auxiliary pistons (5, 6; 5a, 6a) and which have the second and third stops (21, 22; 21a, 22a; 23, 24; 23a, 24a), are directed radially inwards, and the mutually facing ends of the auxiliary pistons (5, 6; 5a, 6a) bound an annular space (76, 76a) which surrounds the setting member (2, 2a) and is connected to the atmosphere.

2. An actuator drive according to Claim 1, **characterized in that** the counter stop (10, 11; 10a, 11a) on the housing for the first stop (8, 9; 8a, 9a) is a shoulder, directed radially inwards, in the inner wall of the housing (1; 1a).

3. An actuator drive according to Claim 1 or 2, **characterized in that** the second stop (21, 22; 21a, 22a) is a piston surface - which can be acted upon by the hydraulic medium - of the flange, directed radially inwards, of the auxiliary pistons (5, 6; 5a, 6a).

4. An actuator drive according to one of Claims 1 to 3, **characterized in that** the counter stop (19, 20; 19a, 20a) - associated with the second stop (21, 22; 21a, 22a) - of the setting member (2; 2a) is a piston surface which can be acted upon by the hydraulic medium.

5. An actuator drive according to one of Claims 1 to 4, **characterized in that** the second stop (21, 22; 21a, 22a) of the auxiliary pistons (5, 6; 5a, 6a) partly covers the counter stop (19, 20; 19a, 20a) of the setting member (2; 2a) in the stop position.

6. An actuator drive according to one of Claims 1 to 5, **characterized in that** the third stop (23, 24; 23a, 24a) is an annular member which surrounds a tapered portion (14, 15; 14a, 15a) of the setting member (2; 2a) at a distance.

7. An actuator drive according to one of Claims 1 to 6, **characterized in that** a further piston (30) is formed in a compression space (12a), and it divides the compression space (12a) into two mutually separate compression chambers (12a', 12a") which can be acted upon by hydraulic medium, preferably independently of each other.

8. An actuator drive according to Claim 7, **characterized in that** in a middle position the further piston (30) rests under pressure against at least one stop (32), preferably in the form of a circlip, on the housing.

9. An actuator drive according to one of Claims 1 to 8, **characterized in that**, in order to determine the axial position of the setting member (2; 2a), a path-measuring system (26; 26a) is provided, which is preferably provided with a potentiometer which has at least one conductor track (27) against which a wiper (28) of the setting member (2; 2a) rests.

10. An actuator drive according to one of Claims 1 to 9, **characterized in that** the setting member (2; 2a) can be coupled to a gear-shift shaft (58) of the gearbox (57).

## Revendications

1. Dispositif d'entraînement de réglage pour une boîte de vitesses de véhicules automobiles, comportant un boîtier (1,1a), dans lequel une partie de réglage (2,2a), de préférence un piston, qui peut être chargée par un fluide hydraulique, est déplaçable axialement pour être amenée dans différentes positions de commutation, et sur lequel sont montés deux pistons auxiliaires (5,6;5a,6a), qui délimitent partiellement respectivement au moins une chambre de pression (12,13;12a,13a) avec des raccords (A,B,C) et qui peuvent être chargés par le fluide hydraulique et par rapport auxquels la partie de réglage (2,2a) est déplaçable et qui comportent, au niveau de leurs extrémités situées à l'opposé l'une de l'autre, respectivement au moins une première butée (8,9;8a,9a) prévue sur une bride et avec laquelle ils s'appliquent, dans une position, contre au moins une butée antagoniste (10,11;10a,11a) solidaire du boîtier, au moins une seconde butée (21,22;21a,22a), qui est située dans le trajet de déplacement d'au moins une butée antagoniste (19,20;19a,20a) de la partie de réglage (2,2a), et au moins une troisième butée (23,24;23a,24a), qui est prévue sur les brides des pistons auxiliaires (5,6;5a,6a),
caractérisé en ce que les brides, qui sont prévues sur les extrémités, situées à l'opposé les unes des autres, des pistons auxiliaires (5,6;5a,6a) et qui comportent les seconde et troisième butées (23,24;23a,24a;23,24;23a,24a) sont dirigées radialement vers l'intérieur et que les extrémités, qui sont tournées les unes vers les autres, des pistons auxiliaires (5,6;5a,6a) délimitent un espace annulaire (76,76a), qui entoure la partie de réglage (2,2a) et est relié à l'atmosphère.

2. Dispositif d'entraînement de réglage selon la revendication 1, caractérisé en ce que la butée antagoniste (10,11;10a,11a) située sur le boîtier pour la première butée (8,9;8a,9a) est un épaulement, qui est dirigé radialement vers l'intérieur et est formé dans la paroi intérieure du boîtier (1;1a).

3. Dispositif d'entraînement de réglage selon la revendication 1 ou 2, caractérisé en ce que la seconde butée (21,22;21a,22a) est une surface de la bride, qui peut être chargée par le fluide sous pression et est dirigée radialement vers l'intérieur, des pistons auxiliaires (8,9;8a,9a).

4. Dispositif d'entraînement de réglage selon l'une des revendications 1 à 3, caractérisé en ce que la butée antagoniste (19,20;19a,20a), qui est associée à la seconde butée (21,22;21a,22a) de la partie de réglage (2; 2a), est une surface de piston pouvant être chargée par le fluide sous pression.

5. Dispositif d'entraînement de réglage selon l'une des revendications 1 à 4, caractérisé en ce que dans la position de butée, la seconde butée (21,22;21a,22a) des pistons auxiliaires (5, 6;5a,6a) recouvre partiellement la butée antagoniste (19,20;19a,20a) de la partie de réglage (2,2a).

6. Dispositif d'entraînement de réglage selon l'une des revendications 1 à 5, caractérisé en ce que la troisième butée (23,24;23a,24a) est une partie annulaire, qui entoure à distance une partie rétrécie (14,15;14a,15a) de la partie de réglage (2;2a).

7. Dispositif d'entraînement de réglage selon l'une des revendications 1 à 6, caractérisé en ce que dans une chambre de pression (12a) est logé un autre piston (30) qui divise la chambre de pression (12a) en deux chambres de pression (12a', 12a") séparées l'une de l'autre et qui peuvent être chargées avantageusement indépendamment l'une de l'autre par un fluide sous pression.

8. Dispositif d'entraînement de réglage selon la revendication 7, caractérisé en ce que dans une position médiane, l'autre piston (30) s'applique sous pression contre au moins une butée (32) qui est située sur le boîtier et est formée avantageusement sous la forme d'un circlip.

9. Dispositif d'entraînement de réglage selon l'une des revendications 1 à 8, caractérisé en ce que pour détecter la position axiale de la partie de réglage (2;2a) il est prévu un système de mesure de déplacement (26;26a), qui possède de préférence un potentiomètre qui comporte au moins une piste conductrice (27), sur laquelle s'applique un curseur (28) de la partie de réglage (2;2a).

10. Dispositif d'entraînement de réglage selon l'une des revendications 1 à 9, caractérisé en ce que la partie de réglage (2,2a) peut être accouplée à un arbre de commutation (58) de la boîte de vitesses (57).
